(19) Europäisches Patentamt
European Patent Office
Office européen des brevets

(11) EP 3 526 286 B1

# (12) EUROPEAN PATENT SPECIFICATION

(45) Date of publication and mention of the grant of the patent:
**19.08.2020 Bulletin 2020/34**

(21) Application number: **17783437.1**

(22) Date of filing: **05.10.2017**

(51) Int Cl.:
***C08L 23/12*** *(2006.01)*

(86) International application number:
**PCT/EP2017/075288**

(87) International publication number:
**WO 2018/069127 (19.04.2018 Gazette 2018/16)**

## (54) NUCLEATED PROPYLENE POLYMER COMPOSITION

NUKLEIERTE PROPYLENPOLYMERZUSAMMENSETZUNG

COMPOSITIONS DE POLYMÈRE PROPYLÈNE NUCLÉÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.10.2016 EP 16193959**

(43) Date of publication of application:
**21.08.2019 Bulletin 2019/34**

(73) Proprietor: **Basell Poliolefine Italia S.r.l.**
**20121 Milano (IT)**

(72) Inventors:
- **MASSARI, Paola**
**44122 Ferrara (IT)**
- **FELISATI, Andrea**
**44122 Ferrara (IT)**
- **IZZI, Marco**
**60325 Frankfurt (DE)**
- **CAVALIERI, Claudio**
**44122 Ferrara (IT)**
- **CIARAFONI, Marco**
**44122 Ferrara (IT)**
- **GUERRA, Silvia**
**44122 Ferrara (IT)**
- **PANTALEONI, Roberto**
**44122 Ferrara (IT)**
- **MALIZIA, Federica**
**44122 Ferrara (IT)**

(74) Representative: **LyondellBasell**
**c/o Basell Poliolefine Italia**
**Intellectual Property**
**P.le Donegani 12**
**44122 Ferrara (IT)**

(56) References cited:
**EP-A1- 2 733 175**
**WO-A1-2010/149705**
**US-B1- 6 300 415**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 526 286 B1

Printed by Jouve, 75001 PARIS (FR)

## Description

FIELD OF THE INVENTION

The present disclosure relates to a nucleated propylene polymer composition fit for films having an optimum balance of properties in particular improved sealing properties.

BACKGROUND OF THE INVENTION

As is known, the isotactic polypropylene is endowed with an exceptional combination of excellent properties which render it suitable for a very great number of uses. In order to improve said properties into the propylene stereoregular homopolymerization process have been introduced one or more copolymerization steps or one or more monomer have been introduced in the homopolymer matrix.

WO 05/014713 relates to a heterophasic polyolefin composition comprising (percent by weight):

1) 65-95% of a crystalline propylene polymer selected from propylene homopolymer and random polymer of propylene with 0.1-10% of an alpha -olefin selected from ethylene, a $C_4$-$C_{10}$ alpha-olefin and a mixture thereof, the said polymer being insoluble in xylene at ambient temperature in an amount over 85% and having a polydispersity index ranging from 4 to 13, preferably 4.5 to 12, more preferably 5 to 9, and an intrinsic viscosity value over 2.2 dl/g, preferably 2.2 to 4.5 dl/g; and
2) 5-35% of an elastomeric olefin polymer of ethylene with a $C_3$-$C_{10}$ alpha -olefin and optionally a diene, having an ethylene content ranging from 15 to 85% and an intrinsic viscosity value of at least 1.4 dl/g, preferably from 2.5 to 5 dl/g.

SUMMARY OF THE INVENTION

The applicant found that it is possible to achieve improved properties especially in term of sealing properties by using a particular class of nucleated propylene polymer composition.

The object of the present disclosure is a nucleated propylene polymer composition comprising:

A) from 77 wt% to 91 wt%, of a propylene homopolymer having a fraction insoluble in xylene at 25 °C higher than 95 %;
B) from 9 wt % to 23 wt%, of a copolymer of propylene with from 28.0 wt% to 42.0 wt% of ethylene derived units;
the composition having an intrinsic viscosity of the fraction soluble in xylene at 25 °C comprised between 1.0 dl/g and 1.9 dl/g, a fraction soluble in xylene at 25 °C comprised between 9.0 wt% and 21.0 wt%, a total melt flow rate (Melt Flow Rate according to ISO 1133, condition L, i.e. 230°C and 2.16 kg load) comprised between 1.5 and 5 g/10 min and the value of the relation (I):

$$22.5+0.2*MFR-1.2*Xs+0.2*IV \qquad (I)$$

is higher than 5.9; wherein

MFR is the melt flow rate of the nucleated composition (Melt Flow Rate according to ISO 1133, condition L, i.e. 230°C and 2.16 kg load);
IV is the intrinsic viscosity of the fraction soluble in xylene at 25 °C; and
Xs is the fraction soluble in xylene at 25°C;
wherein the amount of A+B is equal to 100wt%
and wherein the nucleated agent is selected from the group consisting of aromatic or aliphatic carboxylic acids, aromatic metal phosphates, sorbitol derivatives and talc.

A further object of the present disclosure is a film comprising said propylene polymer composition.

DETAILED DESCRIPTION OF THE INVENTION

The object of the present disclosure is a nucleated propylene polymer composition comprising:

A) from 77 wt% to 91 wt%, preferably from 80 wt% to 90 wt%, more preferably from 83 wt% to 89 wt% of a propylene homopolymer having a fraction insoluble in xylene at 25 °C, higher than 95 %, preferably higher than 96 wt%;
B) from 9 wt % to 23 wt%, preferably from 10 wt% to 20 wt%, more preferably from 11 wt% to 17 wt% of a copolymer

of propylene with from 28.0wt% to 42.0 wt%, preferably from 31.0 wt% to 39.0 wt%; more preferably from 32.0 wt% to 38.0 wt% of ethylene derived units;
the composition having an intrinsic viscosity of the fraction soluble in xylene at 25 °C comprised between 1.0 dl/g and 1.9 dl/g; preferably from 1.2 dl/g to 1.7 dl/g a fraction soluble in xylene at 25 °C comprised between 9.0 wt% and 21.0 wt%; preferably comprised between 11.0 wt% and 18.0 wt%; more preferably comprised between 12.0 wt% and 16.0 wt%; a total melt flow rate (Melt Flow Rate according to ISO 1133, condition L, i.e. 230°C and 2.16 kg load) comprised between 1.5 and 5 g/10 min; preferably between 2.5 and 4.5 g/10 min and the value of the relation (I):

$$22.5+0.2*MFR-1.2*Xs+0.2*IV \quad (I)$$

is higher than 5.9; preferably is comprised between 6.1 and 7.3; more preferably comprised between 6.4 and 7.2; even more preferably comprised between 6.6 and 7.0;
wherein

MFR is the melt flow rate of the nucleated composition (Melt Flow Rate according to ISO 1133, condition L, i.e. 230°C and 2.16 kg load);
IV is the intrinsic viscosity of the fraction soluble in xylene at 25 °C; and
Xs is the a fraction soluble in xylene at 25°C;
wherein the amount of A+B is equal to 100wt%
and wherein the nucleated agent is selected from the group consisting of aromatic or aliphatic carboxylic acids, aromatic metal phosphates, sorbitol derivatives and talc; preferably the nucleated agent is selected from the group consisting of dibenzylidene sorbitol compounds (such as unsubstituted dibenzylidene sorbitol (DBS), p-methyldibenzylidene sorbitol (MDBS), 1,3-0-2, 4-bis (3, 4-dimethylbenzylidene) sorbitol (DMDBS) available from Milliken under the trade name Millad 3988)), sodium benzoate, talc, metal salts of cyclic phosphoric esters (such as sodium 2, 2'-methylene-bis- (4, 6-di-tert-butylphenyl) phosphate (from Asahi Denka Kogyo K. K., known as NA-11), and cyclic bis-phenol phosphates (such as NA-21, also available from Asahi Denka)), metal salts (such as calcium) of hexahydrophthalic acid, and the unsaturated compound of disodium bicyclo [2.2. 1] heptene dicarboxylate, known as HPN-68 available from Milliken. Dibenzylidene sorbitol derivatives are the most preferred; 1,3-0-2, 4-bis (3, 4-dimethylbenzylidene) sorbitol (DMDBS) available from Milliken under the trade name Millad 3988 is the most preferred.

From the above definitions it is evident that the term "copolymer" is limited to polymers containing only propylene and ethylene.

The propylene polymer composition of the present disclosure show a high value in the sealing test described in the example section. This allows the propylene polymer composition to be used for making film with very good sealing properties. Thus a further object of the present disclosure is a film comprising the propylene polymer composition above described. Film can be cast film, BOPP film, blow film, monolayer or multilayer films.

The good value at the sealing test is due to the particular structure of the propylene polymer composition of the present disclosure and to the mechanical and physical features.

The propylene polymer compositions of the present disclosure is prepared by sequential polymerization in at least two stages, with each subsequent polymerization stage being conducted in the presence of the polymeric material formed in the immediately preceding polymerization reaction, wherein the polymer (A) is normally prepared in at least one first polymerization stage and the copolymer (B) is normally prepared in at least one second polymerization stage. The nucleated agent is then added during the compounding process together with the other additives commonly used in the art.

Preferably, each polymerization stage is carried out in presence of a highly stereospecific heterogeneous Ziegler-Natta catalyst. The Ziegler-Natta catalysts suitable for producing the propylene polymer compositions of the disclosure comprise a solid catalyst component comprising at least one titanium compound having at least one titanium-halogen bond and at least an electron-donor compound (internal donor), both supported on magnesium chloride. The Ziegler-Natta catalysts systems further comprise an organo-aluminum compound as essential co-catalyst and optionally an external electron-donor compound.

Suitable catalysts systems are described in the European patents EP45977, EP361494, EP728769, EP 1272533 and in the international patent application WO00163261.

Preferably, the solid catalyst component comprises Mg, Ti, halogen and an electron donor selected from succinates of formula (I):

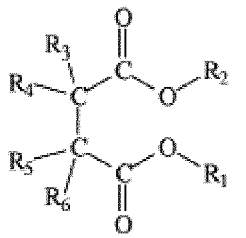

(I)

wherein the radicals $R^1$ and $R^2$, equal to or different from each other, are a $C_1$-$C_{20}$ linear or branched alkyl, alkenyl, cycloalkyl, aryl, arylalkyl or alkylaryl group, optionally containing heteroatoms belonging to groups 15-17 of the periodic table; the radicals $R^3$ to $R^6$ equal to or different from each other, are hydrogen or a $C_1$-$C_2$ linear or branched alkyl, alkenyl, cycloalkyl, aryl, arylalkyl or alkylaryl group, optionally containing heteroatoms, and the radicals $R^3$ to $R^6$ which are joined to the same carbon atom can be linked together to form a cycle.

$R^1$ and $R^2$ are preferably $C_1$-$C_8$ alkyl, cycloalkyl, aryl, arylalkyl and alkylaryl groups.

Particularly preferred are the compounds in which $R^1$ and $R^2$ are selected from primary alkyls and in particular branched primary alkyls. Examples of suitable $R^1$ and $R^2$ groups are methyl, ethyl, n-propyl, n-butyl, isobutyl, neopentyl, 2-ethylhexyl. Particularly preferred are ethyl, isobutyl, and neopentyl.

One of the preferred groups of compounds described by the formula (I) is that in which $R^3$ to $R^5$ are hydrogen and $R^6$ is a branched alkyl, cycloalkyl, aryl, arylalkyl and alkylaryl radical having from 3 to 10 carbon atoms. Another preferred group of compounds within those of formula (I) is that in which at least two radicals from $R^3$ to $R^6$ are different from hydrogen and are selected from $C_1$-$C_{20}$ linear or branched alkyl, alkenyl, cycloalkyl, aryl, arylalkyl or alkylaryl group, optionally containing heteroatoms belonging to groups.

Particularly preferred are the compounds in which the two radicals different from hydrogen are linked to the same carbon atom. Furthermore, also the compounds in which at least two radicals different from hydrogen are linked to different carbon atoms, that is $R^3$ and $R^5$ or $R^4$ and $R^6$ are particularly preferred.

According to a preferred method, the solid catalyst component can be prepared by reacting a titanium compound of formula $Ti(OR)_{n-y}X_y$ where n is the valence of titanium and y is a number between 1 and n, preferably TiC4, with a magnesium chloride deriving from an adduct of formula $MgCl_2 \cdot pROH$, where p is a number between 0.1 and 6, preferably from 2 to 3.5, and R is a hydrocarbon radical having 1-18 carbon atoms. The adduct can be suitably prepared in spherical form by mixing alcohol and magnesium chloride in the presence of an inert hydrocarbon immiscible with the adduct, operating under stirring conditions at the melting temperature of the adduct (100-130 "C). Then, the emulsion is quickly quenched, thereby causing the solidification of the adduct in form of spherical particles. Examples of spherical adducts prepared according to this procedure are described in US 4,399,054 and US 4,469,648. The so obtained adduct can be directly reacted with the Ti compound or it can be previously subjected to thermal controlled dealcoholation (80-130 °C) so as to obtain an adduct in which the number of moles of alcohol is generally lower than 3, preferably between 0.1 and 2.5. The reaction with the Ti compound can be carried out by suspending the adduct (dealcoholated or as such) in cold $TiCl_4$ (generally 0 °C); the mixture is heated up to 80-130 °C and kept at this temperature for 0.5-2 hours. The treatment with Tic4 can be carried out one or more times. The internal donor can be added during the treatment with $TiCl_4$ and the treatment with the electron donor compound can be repeated one or more times. Generally, the succinate of formula (I) is used in molar ratio with respect to the MgC12 of from 0.01 to 1 preferably from 0.05 to 0.5. The preparation of catalyst components in spherical form is described for example in European patent application EP-A-395083 and in the International patent application WO98144001. The solid catalyst components obtained according to the above method show a surface area (by B.E.T. method) generally between 20 and 500 m2/g and preferably between 50 and 400 m2/g, and a total porosity (by B.E.T. method) higher than 0.2 cm3/g preferably between 0.2 and 0.6 cm3/g. The porosity (Hg method) due to pores with radius up to 10.000A generally ranges from 0.3 to 1.5 cm3/g, preferably from 0.45 to 1 cm3/g.

The organo-aluminum compound is preferably an alkyl-Al selected from the trialkyl aluminum compounds such as for example triethylaluminum, triisobutylaluminum, tri-n-butylaluminum, tri-n-hexylaluminum, tri-n-octylaluminum. It is also possible to use mixtures of trialkylaluminum's with alkylaluminum halides, alkylaluminum hydrides or alkylaluminum sesquichlorides such as $AlEt_2Cl$ and $Al_2Et_3Cl_3$.

Preferred external electron-donor compounds include silicon compounds, ethers, esters such as ethyl 4-ethoxybenzoate, amines, heterocyclic compounds and particularly 2,2,6,6-tetramethyl piperidine, ketones and the 1,3-diethers. Another class of preferred external donor compounds is that of silicon compounds of formula $R_a^5R_b^6Si(OR^7)_c$ where a and b are integer from 0 to 2, c is an integer from 1 to 3 and the sum (a+b+c) is 4; $R^5$, $R^6$, and $R^7$, are alkyl, cycloalkyl or aryl radicals with 1-18 carbon atoms optionally containing heteroatoms. Particularly preferred are methylcyclohexyldimethoxysilane, diphenyldimethoxysilane, methyl-t-butyldimethoxysilane, dicyclopentyldimethoxysilane, 2-ethylpiperidinyl-2-t-butyldimethoxysilane and 1,1,1 ,trifluoropropyl-2-ethylpiperidinyl-dimethoxysilane and 1,1,1 ,trifluoropropyl-metildimethoxysilane. The external electron donor compound is used in such an amount to give a molar ratio between the organo-aluminum compound and said electron donor compound of from 0.1 to 500.

The polymerization process can be carried out in gas phase and/or in liquid phase, in continuous or batch reactors, such as fluidized bed or slurry reactors. For example, it is possible to carry out the polymerization of the propylene polymer (A) in liquid phase, using liquid propylene as diluent, while the copolymerization stage to obtain the propylene copolymer fraction (B) is carried out in gas phase, without intermediate stages except for the partial degassing of the monomers. Alternatively, all the sequential polymerization stages can be carried out in gas phase. The reaction time, temperature and pressure of the polymerization steps are not critical, however the temperature for the preparation of fraction (A) and (B), that can be the same or different, is usually from 50°C to 120°C. The polymerization pressure preferably ranges from 0.5 to 30 MPa if the polymerization is carried out in gas-phase. The catalytic system can be pre-contacted (pre-polymerized) with small amounts of olefins. The molecular weight of the propylene polymer composition is regulated by using known regulators, such as hydrogen.

In the second stage of the particularly preferred polymerization process, the propylene/ethylene copolymer (B) is produced in a conventional fluidized-bed gas-phase reactor in the presence of the polymeric material and the catalyst system coming from the preceding polymerization step. The nucleated propylene polymer compositions of the present disclosure may further comprise additives commonly employed in the polyolefin field, such as antioxidants, light stabilizers, antiacids, colorants and fillers.

The nucleated propylene polymer compositions of the present disclosure further presents a X-ray spectrum having a degree of crystallinity lower than 60 % measured on rotating compression molded DMTA plaques.

The following examples are given to illustrate and not to limit the present disclosure

EXAMPLES

The data of the propylene polymer materials were obtained according to the following methods:

**Xylene-soluble faction at 25°C**

The Xylene Soluble fraction was measured according to ISO 16152, 2005, but with the following deviations (between brackets what prescribed by the ISO 16152)

The solution volume is 250 ml (200 ml)

During the precipitation stage at 25°C for 30 min, the solution, for the final 10 minutes, is kept under agitation by a magnetic stirrer (30 min, without any stirring at all)

The final drying step is done under vacuum at 70°C (100 °C)

The content of said xylene-soluble fraction is expressed as a percentage of the original 2.5 grams and then, by difference (complementary to 100), the xylene insoluble %

**Ethylene (C2) content**

**$^{13}$C NMR of propylene/ethylene copolymers**

$^{13}$C NMR spectra were acquired on a Bruker AV-600 spectrometer equipped with cryoprobe, operating at 160.91 MHz in the Fourier transform mode at 120°C.

The peak of the $S_{\beta\beta}$ carbon (nomenclature according to "Monomer Sequence Distribution in Ethylene-Propylene Rubber Measured by 13C NMR. 3. Use of Reaction Probability Mode" C. J. Carman, R. A. Harrington and C. E. Wilkes, Macromolecules, 1977, 10, 536) was used as internal reference at 29.9 ppm. The samples were dissolved in 1,1,2,2-tetrachloroethane-d2 at 120°C with a 8 % wt/v concentration. Each spectrum was acquired with a 90° pulse, 15 seconds of delay between pulses and CPD to remove 1H-13C coupling. 512 transients were stored in 32K data points using a spectral window of 9000 Hz.

The assignments of the spectra, the evaluation of triad distribution and the composition were made according to Kakugo ("Carbon-13 NMR determination of monomer sequence distribution in ethylene-propylene copolymers prepared with δ-titanium trichloride-diethylaluminum chloride" M. Kakugo, Y. Naito, K. Mizunuma and T. Miyatake, Macromolecules, 1982, 15, 1150) using the following equations:

$$PPP = 100\ T_{\beta\beta}/S \qquad PPE = 100\ T_{\beta\delta}/S \qquad EPE = 100\ T_{\delta\delta}/S$$

$$PEP = 100\ S_{\beta\beta}/S \qquad PEE= 100\ S_{\beta\delta}/S \qquad EEE = 100\ (0.25\ S_{\gamma\delta}+0.5\ S_{\delta\delta})/S$$

$$S = T_{\beta\beta} + T_{\beta\delta} + T_{\delta\delta} + S_{\beta\beta} + S_{\beta\delta} + 0.25\ S_{\gamma\delta} + 0.5\ S_{\delta\delta}$$

The molar percentage of ethylene content was evaluated using the following equation:

$$E\%\ mol = 100 * [PEP+PEE+EEE]$$

The weight percentage of ethylene content was evaluated using the following equation:

$$E\%\ wt. = \frac{100 * E\%\ mol * MW_E}{E\%\ mol * MW_E + P\%\ mol * MW_P}$$

where P% mol is the molar percentage of propylene content, while $MW_E$ and $MW_P$ are the molecular weights of ethylene and propylene, respectively.

The product of reactivity ratio $r_1r_2$ was calculated according to Carman (C.J. Carman, R.A. Harrington and C.E. Wilkes, Macromolecules, 1977; 10, 536) as:

$$r_1r_2 = 1 + \left(\frac{EEE+PEE}{PEP}+1\right) - \left(\frac{P}{E}+1\right)\left(\frac{EEE+PEE}{PEP}+1\right)^{0.5}$$

The tacticity of Propylene sequences was calculated as mm content from the ratio of the PPP mm$T_{\beta\beta}$ (28.90-29.65 ppm) and the whole $T_{\beta\beta}$ (29.80-28.37 ppm).
Ethylene C2 content has been measured on the final composition the ethylene content of component B) is than calculated by using the formula $C2tot=X_BC2_B$ wherein $X_B$ is the amount of component B in the composition.

**Molar ratio of feed gasses**

Determined by gas-chromatography

**Melt flow rate (MFR)**

The melt flow rate MFR of the polymer was determined according to ISO 1133 (230°C, 2.16 Kg).

**Intrinsic viscosity**

Determined in tetrahydronaphthalene at 135°C

**Preparation of the films**

Films with a thickness of 70 μm were prepared by extruding each test composition in a single screw Collin extruder (length/diameter ratio of screw 1:25) at a film drawing speed of 7 m/min and a melt temperature of 210-250 °C.

**Sealing test**

The films prepared as above were conditioned 24 hours at 23°C, then for each film three rectangular samples with dimensions of 14 cm in machine direction and 7 cm in transverse direction were cut.

The rectangular samples were double folded along the transverse direction in order to obtain book-folded samples that were then sealed along the folding line at 4 bar and 190 °C with a Brugger HSG/ETK sealing machine having teflonized sealing jaws having width 10 mm and contact time 1 s.

After being sealed, the book-folded samples where sterilized at 135°C for 45 min, left at room temperature in autoclave for 12 h and then conditioned at 23 °C for 6 h.

From each book-folded sample three book-folded specimens having width of 15 mm were obtained by using a die cutter, thus obtaining a total amount of nine book-folded specimens for each type of film.

The sealing properties were determined as the peeling strength in Newton of said book folded specimens, evaluated with an Instron 5565A dynamometer at 100 mm/min with a distance between the clamps of 30 mm.

**Haze**

Haze was measured on films with thickness of 70 μm prepared as above by using a Gardner Hazemeter, model HazeGard Plus, according to ASTM D 1003-13.

**X RAY diffraction**

X ray spectra have been recorded on compression molded DMTA plaques. In order to minimize the orientation of the crystallites the spectrum has been recorded on a rotating plaque. The calculation of degree of crystallinity has been performed by using two phase model and single line fitting procedure. The degree of crystallinity of the polymer of example 1 has been measured to be 58.0%

**Example 1**

Preparation of the solid catalyst

Into a 500 mL four-necked round flask, purged with nitrogen, 250 mL of $TiCl_4$ were introduced at 0 °C. While stirring, 10.0 g of microspheroidal $MgCl_2 \cdot 2.1C_2H_5OH$ having average particle size of 47μm (prepared in accordance with the method described in example 1 of EP728769, an amount of diethyl 2,3-diisopropylsuccinate in racemic form such as to have a Mg/succinate molar ratio of 24 was added. The temperature was raised to 100°C and kept at this value for 60min. After that the stirring was stopped, the liquid siphoned off and the treatment with TiCl4 was repeated at 110°C for 30 min. After siphoning, fresh $TiCl_4$ and an amount of 9,9-bis(methoxymethyl)fluorene such as to have a Mg/dieter molar ratio of 12 were added. Then the temperature was raised to 90°C for 30min. After sedimentation and siphoning at 85°C the solid was washed six times with anhydrous hexane (6 x 100 ml) at 60 °C.

Polymerization

The polymerization run is carried out in continuous mode in a series of two reactors equipped with devices to transfer the product from one reactor to the one immediately next to it. The first reactor is a liquid phase loop reactor, and the second is a fluidized bed gas-phase reactor. A propylene homopolymer is prepared in the liquid loop reactor while a propylene ethylene copolymer is prepared in the gas-phase reactor in the presence of the propylene homopolymer coming from the first stage. Hydrogen is used as molecular weight regulator. The gas phase (propylene, ethylene and hydrogen) is continuously analyzed via gas-chromatography. At the end of the run the powder is discharged and dried under a nitrogen flow.

The main polymerization conditions and the analytical data relating to the polymers produced in the two reactors are reported in Table 1. Properties of the polymer are reported on Table 2.

**Comparative example 2**

Comparative example 2 is produced using a catalyst prepared according to the Example 5, lines 48-55 of the European Patent EP728769. Triethylalurninium (TEAL) was used as co-catalyst and cyclohexyl-methy-dimethoxysilane as external donor.

The main polymerization conditions and the analytical data relating to the polymers produced in the two reactors are reported in Table 1. Properties of the polymer are reported on Table 2.

**Comparative example 3**

Comparative example 3 is produced using the same catalyst of Example 1.

The main polymerization conditions and the analytical data relating to the polymers produced in the two reactors are reported in Table 1. Properties of the polymer are reported on Table 2.

Table 1

| PROCESS CONDITIONS | | | |
|---|---|---|---|
| | **Ex. 1** | **Comp Ex 2** | **Comp Ex. 3** |
| **Precontact** | | | |
| Temperature °C | 12 | 12 | 12 |
| Residence time (min) | 20 | 15 | 15 |
| Teal/donor ratio | 4.3 | 5 | 3.5 |
| **Prepolymerization** | | | |
| Temperature °C | 20 | 20 | 20 |
| Residence time (min) | 6.5 | 10 | 10 |
| | | | |
| **Loop 1st reactor in liquid phase** - propylene homopolymer | | | |
| Temperature, °C | 75 | 75 | 75 |
| Pressure, bar | 40 | 38 | 38 |
| Residence time, min | 53 | 60 | 60 |
| H2/C3 mol/ppm | 1320 | 410 | 280 |
| | | | |
| Split, wt% | 85 | 80 | 82 |
| **Gas-Phase reactor** - ethylene/propylene copolymerization | | | |
| Temperature, °C | 70 | 75 | 70 |
| Pressure, bar | 14 | 15 | 12 |
| Residence time, min | 18 | 18 | 18 |
| H2/C3 mol/mol | | | |
| H2/C2 mol/mol | 0.264 | 0.048 | 0.068 |
| C2/C2+C3 mol/ mol | 0.2 | 0.24 | 0.42 |
| split wt% | 15 | 20 | 18 |
| C2 ethylene; C3 propylene; H2 hydrogen<br>*Amount of component B with respect to A+B<br>$C_2^-$= ethylene $C_3^-$ = propylene | | | |

To the material obtained according to example 1 the following additives have been added:

| | | Ex. 1 | Comp Ex 2 | Comp Ex. 3 |
|---|---|---|---|---|
| Polymer composition of the example | wt% | 99.670 | 99.770 | 99.770 |
| Antioxidants | wt% | 0.1725 | 0.1725 | 0.1725 |
| Calcium stearate | wt% | 0.0575 | 0.0575 | 0.0575 |
| Millad 3988 | wt% | 0.1000 | 0 | 0 |

The materials have been extruded and analysed; a 70 μm film is obtained as above described. The properties are reported in table 2.

Table 2

| Example | | Ex. 1 | Comp Ex 2 | Comp Ex. 3 |
|---|---|---|---|---|
| component A) | | | | |
| Xylene insolubles at 25°C | % | >96 | >96 | >96 |
| %copolymer component B) | wt% | 14 | 16 | 15 |
| %$C_2^-$ component B) | wt% | 35.0 | 38.5 | 55.0 |
| properties of the composition | | | | |
| MFR of the composition | g/10 min | 3.1 | 0.8 | 0.9 |
| Xylene soluble at 25°C, Xs | wt% | 13.7 | 16.2 | 14.8 |
| XsIV | dl/g | 1.5 | 2.5 | 3.0 |
| relation (I) | | 7.0 | 3.7 | 5.5 |
| haze 70μm film | % | 6.2 | 40.2 | n.m. |
| sealing test | N | 30.5 | 26.4 | 28.8 |
| $C_2^-$= ethylene<br>XsIV= intrinsic viscosity of fraction soluble in xylene at 25°C<br>n.m.=not measured | | | | |

By comparing example 1 and comparative examples 2 and 3 it is possible to note that the sealing test is higher in the example 1 while relation (I) is not met in comparative example 2 and 3.

## Claims

1. A nucleated propylene polymer composition comprising:

A) from 77 wt% to 91 wt%, of a propylene homopolymer having a fraction insoluble in xylene at 25 °C higher than 95 %;
B) from 9 wt % to 23 wt%, of a copolymer of propylene with from 28.0 wt% to 42.0 wt% of ethylene derived units;
the composition having an intrinsic viscosity of the fraction soluble in xylene at 25 °C comprised between 1.0 dl/g and 1.9 dl/g, a fraction soluble in xylene at 25 °C comprised between 9.0 wt% and 21.0 wt%, a total melt flow rate (Melt Flow Rate according to ISO 1133, condition L, i.e. 230°C and 2.16 kg load) comprised between 1.5 and 5 g/10 min and the value of the relation (I):

$$22.5+0.2*MFR-1.2*Xs+0.2*IV \qquad (I)$$

is higher than 5.9; wherein

MFR is the melt flow rate of the nucleated composition (Melt Flow Rate according to ISO 1133, condition L, i.e. 230°C and 2.16 kg load);
IV is the intrinsic viscosity of the fraction soluble in xylene at 25 °C; and
Xs is the fraction soluble in xylene at 25°C;
wherein the amount of A+B is equal to 100 wt%
and wherein the nucleated agent is selected from the group consisting of aromatic or aliphatic carboxylic acids, aromatic metal phosphates, sorbitol derivatives and talc.

2. The composition according to claim 1 wherein component A) is from 80 wt% to 90 wt%, preferably from 83 wt% to 89 wt%, and component B) is from 10 wt% to 20 wt%, preferably from 11 wt% to 17 wt%, wherein the amount of A+B is equal to 100wt%.

3. The composition according to claims 1 or 2 wherein the fraction insoluble in xylene at 25 °C of component A) is higher than 96 wt%.

4. The composition according to anyone of claims 1-3 wherein the ethylene derived units of component B) are from 28.0 wt% to 42.0 wt%, preferably from 31.0 wt% to 39.0 wt%, more preferably from 32.0 wt% to 38.0 wt%.

5. The composition according to anyone of claims 1-4 wherein the intrinsic viscosity of the fraction soluble in xylene at 25 °C is comprised between 1.2 dl/g to 1.7 dl/g.

6. The composition according to anyone of claims 1-5 wherein the fraction soluble in xylene at 25 °C is comprised between 11.0 wt% to 18.0 wt%, preferably from 12.0 wt% to 16.0 wt%.

7. The composition according to anyone of claims 1-6 wherein the total melt flow rate (Melt Flow Rate according to ISO 1133, condition L, i.e. 230°C and 2.16 kg load) is comprised between 2.5 and 4.5 g/10 min.

8. The composition according to anyone of claims 1-7 wherein the value of the relation (I) is comprised between 6.1 and 7.3.

9. The composition according to anyone of claims 1-8 wherein the value of the relation (I) is comprised between 6.4 and 7.2, preferably between 6.6 and 7.0.

10. Film comprising the nucleated propylene polymer composition according to anyone of claims 1-9.

## Patentansprüche

1. Nukleierte Propylenpolymerzusammensetzung, umfassend:

   A) 77 Gew.% bis 91 Gew.% eines Propylenhomopolymers mit einer in Xylol bei 25 °C unlöslichen Fraktion von mehr als 95 %;
   B) 9 Gew.% bis 23 Gew.% eines Copolymers von Propylen mit 28,0 Gew.% bis 42,0 Gew. % von Ethylen abgeleiteten Einheiten;
   wobei die Zusammensetzung eine Grenzviskosität der in Xylol bei 25 °C löslichen Fraktion zwischen 1,0 dl/g und 1,9 dl/g aufweist, wobei eine in Xylol bei 25 °C lösliche Fraktion zwischen 9,0 Gew.% und 21,0 Gew.% ausmacht, eine Gesamtschmelzflussrate (Schmelzflussrate gemäß ISO 1133, Bedingung L, d. h. 230 °C und 2,16 kg Last) zwischen 1,5 und 5 g/10 min liegt, und der Wert der Beziehung (I):

$$22{,}5 + 0{,}2 * MFR - 1{,}2 * Xs + 0{,}2 * IV \qquad (I)$$

   höher als 5,9 ist, wobei

   MFR die Schmelzflussrate der nukleierten Zusammensetzung ist (Schmelzflussrate gemäß ISO 1133, Bedingung L, d. h. 230 °C und 2,16 kg Last)
   IV die Grenzviskosität der in Xylol bei 25 °C löslichen Fraktion ist; und
   Xs die in Xylol bei 25 °C lösliche Fraktion ist;
   wobei die Menge von A+B 100 Gew.% ergibt,
   und wobei das Nukleierungsmittel ausgewählt ist aus der Gruppe bestehend aus aromatischen oder aliphatischen Carbonsäuren, aromatischen Metallphosphaten, Sorbitderivaten und Talkum.

2. Zusammensetzung nach Anspruch 1, wobei Komponente A) 80 Gew.% bis 90 Gew.%, vorzugsweise 83 Gew.% bis 89 Gew.% ausmacht, und Komponente B) 10 Gew.% bis 20 Gew.%, vorzugsweise 11 Gew.% bis 17 Gew.% ausmacht, wobei die Menge von A + B 100 Gew.% ergibt.

3. Zusammensetzung nach den Ansprüchen 1 oder 2, wobei die in Xylol bei 25 °C unlösliche Fraktion der Komponente A) größer als 96 Gew.% ist.

4. Zusammensetzung nach einem der Ansprüche 1 bis 3, wobei die von Ethylen abgeleiteten Einheiten der Komponente

B) 28,0 Gew.% bis 42,0 Gew.%, vorzugsweise 31,0 Gew.% bis 39,0 Gew.%, bevorzugter 32,0 Gew.% bis 38,0 Gew.% ausmachen.

5. Zusammensetzung nach einem der Ansprüche 1 bis 4, wobei die Grenzviskosität der in Xylol bei 25 °C löslichen Fraktion zwischen 1,2 dl/g und 1,7 dl/g liegt.

6. Zusammensetzung nach einem der Ansprüche 1 bis 5, wobei die in Xylol bei 25 °C lösliche Fraktion zwischen 11,0 Gew.% und 18,0 Gew.%, vorzugsweise 12,0 Gew.% bis 16,0 Gew.% ausmacht.

7. Zusammensetzung nach einem der Ansprüche 1 bis 6, wobei die Gesamtschmelzflussrate (Schmelzflussrate gemäß ISO 1133, Bedingung L, d. h. 230 °C und 2,16 kg Last) zwischen 2,5 und 4,5 g/10 min liegt.

8. Zusammensetzung nach einem der Ansprüche 1 bis 7, wobei der Wert der Beziehung (I) zwischen 6,1 und 7,3 liegt.

9. Zusammensetzung nach einem der Ansprüche 1 bis 8, wobei der Wert der Beziehung (I) zwischen 6,4 und 7,2, vorzugsweise zwischen 6,6 und 7,0 liegt.

10. Film, der die nukleierte Propylenpolymerzusamensetzung gemäß einem der Ansprüche 1 bis 9 umfasst.

**Revendications**

1. Composition nucléée de polymère de propylène comprenant :

   A) 77% en poids à 91% en poids d'un homopolymère de propylène présentant une fraction insoluble dans le xylène à 25°C supérieure à 95% ;
   B) 9% en poids à 23% en poids d'un copolymère de propylène présentant 28,0% en poids à 42,0% en poids de motifs dérivés de l'éthylène ;
   la composition présentant une viscosité intrinsèque de la fraction soluble dans le xylène à 25°C située entre 1,0 dl/g et 1,9 dl/g, une fraction soluble dans le xylène à 25°C située entre 9,0% en poids et 21,0% en poids, un indice de fluidité à chaud total (indice de fluidité à chaud selon la norme ISO 1133, condition L, c'est-à-dire à 230°C et sous une charge de 2,16 kg) situé entre 1,5 et 5 g/10 min et la valeur de la relation (I) :

$$22{,}5+0{,}2*MFR-1{,}2*Xs+0{,}2*IV \qquad (I)$$

   étant supérieure à 5,9 ;

   MFR étant l'indice de fluidité à chaud de la composition nucléée (indice de fluidité à chaud selon la norme ISO 1133, condition L, c'est-à-dire à 230°C et sous une charge de 2,16 kg) ;
   IV étant la viscosité intrinsèque de la fraction soluble dans le xylène à 25°C ; et
   Xs étant la fraction soluble dans le xylène à 25°C ;
   la quantité de A + B étant égale à 100% en poids
   et l'agent nucléé étant choisi dans le groupe constitué par les acides carboxyliques aromatiques ou aliphatiques, les phosphates métalliques aromatiques, les dérivés de sorbitol et le talc.

2. Composition selon la revendication 1, le constituant A) représentant 80% en poids à 90% en poids, préférablement 83% en poids à 89% en poids, et le constituant B) représentant 10% en poids à 20% en poids, préférablement 11% en poids à 17% en poids, la quantité de A + B étant égale à 100% en poids.

3. Composition selon les revendications 1 ou 2, la fraction insoluble dans le xylène à 25°C du constituant A) étant supérieure à 96% en poids.

4. Composition selon l'une quelconque des revendications 1 à 3, les motifs dérivés de l'éthylène du constituant B) représentant 28,0% en poids à 42,0% en poids, préférablement 31,0% en poids à 39,0% en poids, plus préférablement 32,0% en poids à 38,0% en poids.

5. Composition selon l'une quelconque des revendications 1 à 4, la viscosité intrinsèque de la fraction soluble dans

le xylène à 25°C étant située entre 1,2 dl/g et 1,7 dl/g.

6. Composition selon l'une quelconque des revendications 1 à 5, la fraction soluble dans le xylène à 25°C étant située entre 11,0% en poids et 18,0% en poids, préférablement entre 12,0% en poids à 16,0% en poids.

7. Composition selon l'une quelconque des revendications 1 à 6, l'indice de fluidité à chaud total (indice de fluidité à chaud selon la norme ISO 1133, condition L, c'est-à-dire à 230°C et sous une charge de 2,16 kg) étant situé entre 2,5 et 4,5 g/10 min.

8. Composition selon l'une quelconque des revendications 1 à 7, la valeur de la relation (I) étant située entre 6,1 et 7,3.

9. Composition selon l'une quelconque des revendications 1 à 8, la valeur de la relation (I) étant située entre 6,4 et 7,2, préférablement entre 6,6 et 7,0.

10. Film comprenant la composition nucléée de polymère de propylène selon l'une quelconque des revendications 1 à 9.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 05014713 A
- EP 45977 A
- EP 361494 A
- EP 728769 A
- EP 1272533 A
- WO 00163261 A
- US 4399054 A
- US 4469648 A
- EP 395083 A
- WO 98144001 A


### Non-patent literature cited in the description


- **C. J. CARMAN ; R. A. HARRINGTON ; C. E. WILKES.** Monomer Sequence Distribution in Ethylene-Propylene Rubber Measured by 13C NMR. 3. Use of Reaction Probability Mode. *Macromolecules,* 1977, vol. 10, 536
- **M. KAKUGO ; Y. NAITO ; K. MIZUNUMA ; T. MIYATAKE.** Carbon-13 NMR determination of monomer sequence distribution in ethylene-propylene copolymers prepared with δ-titanium trichloride-diethylaluminum chloride. *Macromolecules,* 1982, vol. 15, 1150
- **C.J. CARMAN ; R.A. HARRINGTON ; C.E. WILKES.** *Macromolecules,* 1977, vol. 10, 536